# EUROPÄISCHE PATENTSCHRIFT

(11) **EP 2 714 361 B1**
(45) Veröffentlichungstag und Bekanntmachung des Hinweises auf die Patenterteilung: **08.07.2015**
(21) Anmeldenummer: 12728178.0
(22) Anmeldetag: 25.05.2012
(51) Int. Cl.: B29C 45/14, B29C 45/26

(54) **VERFAHREN UND WERKZEUG ZUR HERSTELLUNG VON FOLIENDEKORIERTEN KUNSTSTOFFTELLEN MIT DURCHBRÜCHEN ODER TIEFEN EINSCHITTEN MITTELS IMD-SPRITZGUSS**
PROCESS AND DEVICE FOR PRODUCTION OF FILM DECORATED PLASTIC PARTS WITH THROUGH HOLES OR DEEP RECESSES WITH IMD-INJECTION
PRCÉDÉ ET DISPOSITIFE POUR LA FABRICTAION UN PRODUIT DECORÉE AVEC UN FIM COMPRANT UN TOU OU UN CREUX AVEC IMD-INJECTION

(30) Priorität: 30.05.2011 DE 102011102830
(43) Veröffentlichungstag der Anmeldung: 09.04.2014
(73) Patentinhaber: HBW-Gubesch Kunststoff-Engineering GmbH, 91448 Emskirchen (DE)
(72) Erfinder: REICHART, Marc, 90471 Nürnberg (DE); GUBESCH, Werner, 90579 Langenzenn (DE)
(74) Vertreter: FDST Patentanwälte
(86) Internationale Anmeldenummer: PCT/EP2012/002236
(87) Internationale Veröffentlichungsnummer: WO 2012/163502

(56) Entgegenhaltungen:
- EP-A1- 1 897 669
- EP-A1- 2 295 219
- EP-A1- 2 489 492
- JP-A- 2005 144 986
- US-A- 4 752 059

## Beschreibung

Die Erfindung bezieht sich auf eine IMD-Form zur Herstellung eines foliendekorierten Kunststoffteils. Die Erfindung bezieht sich des Weiteren auf eine Spritzgussvorrichtung mit einer solchen IMD-Form sowie auf ein Verfahren zur Herstellung eines foliendekorierten Kunststoffteils mittels IMD-Spritzguss.

Als foliendekorierte Kunststoffteile werden Spritzgussteile bezeichnet, die an einer Sichtoberfläche mit einer Dekorationslackschicht versehen, wobei die letztere optional eine reliefartige Oberflächenstruktur aufweisen kann. Solche foliendekorierten Kunststoffteile werden insbesondere als Elemente einer Fahrzeuginnenraumverkleidung eingesetzt. Die Dekorationslackschicht hat hierbei häufig eine optische Anmutung, die ein anderes Material wie beispielsweise Holz, Edelstahl, etc. imitiert.

Foliendekorierte Kunststoffteile werden insbesondere in der sogenannten IMD(In-Mold-Decoration)-Technik gefertigt. Bei der IMD-Technik wird zunächst die Lackschicht negativ (d.h. mit der späteren Sichtseite nach innen) auf eine abziehbare, flache Trägerfolie aufgebracht. Diese mit der Lackschicht versehene Trägerfolie wird nachfolgend als (IMD-)Folie bezeichnet.

Der eigentliche IMD-Prozess erfolgt in einem besonderen Spritzgussverfahren mittels einer IMD-Form. Eine solche IMD-Form wird üblicherweise aus zwei Halbformen gebildet, die in einem geschlossenen Zustand zwischen sich eine mit einer geschmolzenen Kunststoffmasse auszufüllende Kavität einschließen. Bei diesen Halbformen handelt es sich um
- eine folienzugewandte Halbform, die denjenigen Oberflächenbereich der Kavität trägt, an der die Sichtoberfläche (auch: Frontseite) des zu spritzenden Kunststoffteils ausgebildet werden soll, sowie
- eine folienabgewandte Halbform, die denjenigen Oberflächenbereich der Kavität trägt, der der (nicht zu dekorierenden) Rückseite des Kunststoffteils entspricht.

Die IMD-Folie wird zwischen die Halbformen der offenen IMD-Form hindurchgeführt, so dass die Lackschicht zu der folienabgewandten Halbform weist. Beim Schließen der IMD-Form wird die Folie im Bereich der aneinander anliegenden Formtrennungsflächen zwischen den beiden Halbformen der IMD-Form eingespannt. Nach dem Schließen der IMD-Form wird die Folie mit Kunststoff hinterspritzt, wobei die Folie unter Wirkung des Spritzdrucks an die folienzugewandte Halbform gepresst wird. Die IMD-Folie wird hierbei lokal gedehnt (verstreckt).

Bei dem Spritzgussprozess verbindet sich die Lackschicht mit der erstarrenden Kunststoffmasse. Bei oder nach dem Öffnen der IMD-Form wird die Trägerfolie von der Lackschicht, die nun die Sichtoberfläche des Spritzgussartikels bildet, abgezogen.

Eine IMD-Form nach dem Oberbegriff des Anspruchs 1 ist aus EP 1 897 669 A1 bekannt. Bei der bekannten Form ist der Formkern zusammen mit einer Anzahl von Auswerferstiften an einer Auswerferplatte befestigt. Die aus dem Formkern, den Auswerferstiften und der Auswerferplatte gebildete Baueinheit ist hierbei gegenüber der folienabgewandten Halbform verschiebbar. Bei der bekannten Form handelt es sich um eine Spritzprägeform, bei der die folienabgewandte Halbform durch einen äußeren Formring und einen darin verschiebbar geführten Prägestempel gebildet ist. Bei einem zugehörigen Spritzprägeverfahren wird in einem ersten Entformungsschritt zunächst der Prägestempel gegenüber dem Formring zurückgezogen. Die Position der Auswerferstifte und des Formkern gegenüber dem Formring wird dabei beibehalten, wodurch das Kunststoffteil in seiner Ausgangslage gehalten wird. Erst in einem zweiten Entformungsschritt werden die Auswerferstifte und der Formkern dann gegen den äußeren Formkern verschoben, wodurch das Kunststoffteil aus dem Formring herausgedrückt wird.

Alternativ zu der IMD-Technik existiert das sogenannten Insert-Molding. Bei der Insert-Molding-Technik wird die Lackschicht auf eine im Vergleich zu IMD-Folien wesentlich dickere und damit bedingt formstabile Insert-Folie aufgebracht. Die mit der Lackschicht versehene Insert-Folie wird unter Wirkung von Druck und/oder Temperatur verformt, geschnitten und mit Kunststoff hinterspritzt. Im Gegensatz zu der IMD-Technik werden die Lackschicht und die Folie beim Insert-Molding nicht voneinander getrennt. Vielmehr befindet sich die Insert-Folie bei dem fertigen Kunststoffteil sandwichartig zwischen der Lackschicht und dem Kunststoffkörper.

Problematisch ist der Einsatz der IMD-Technik allerdings bei Kunststoffteilen, deren Sichtoberfläche mit Durchbrüchen oder (nicht zu dekorierenden) Mulden und Einschnitten (allgemein: Vertiefungen) versehen ist. Solche Vertiefungen dienen bei Teilen einer Fahrzeuginnenraumverkleidung beispielsweise zur Aufnahme von Schaltern, Anzeigen oder sonstigen Einsätzen. In dem rückseitigen Bereich solcher Vertiefungen ist daher in der Regel ein als Anlagefläche wirkender Boden oder zumindest ein einschubbegrenzender Anschlag vorgesehen. Die lichte Weite einer solchen Vertiefung nimmt daher typischerweise zur Rückseite des Kunststoffteils hin ab. Andererseits ist der Boden einer solchen Vertiefung regelmäßig zumindest in einem kleinen Flächenbereich durchbrochen, um eine Verschraubung oder Verrastung des Einsatzes an dem Kunststoffteil oder die Zuführung von Stromkabeln zu ermöglichen.

Bei nicht dekorierten Kunststoffteilen werden Vertiefungen üblicherweise mit Hilfe von Formkernen gestellt, die von einer der Halbformen ausgehend in die Kavität hineinstehen. Um das fertige Kunststoffteil entformen zu können, ist ein solcher Formkern stets an derjenigen Halbform befestigt, zu der hin die Vertiefung die größer lichte Weite aufweist. Bei IMD-Teilen ist die Anbringung eines Formkerns an der folienzugewandten Halbform aber - zumindest bei hinreichender Tiefe der Vertiefung - nicht möglich, da durch den Formkern die IMD-Folie überstreckt oder gar verletzt würde. Zu berücksichtigen ist dabei insbesondere, dass die dünnen IMD-Folien nur eine vergleichsweise geringe Verstreckbarkeit aufweisen, bei deren Überschreitung die Lackschicht sichtbar beschädigt wird.

Aus diesen Gründen wird für die Herstellung von foliendekorierten Kunststoffteilen mit Vertiefungen an der Sichtoberfläche regelmäßig auf das - im Vergleich zu IMD wesentlich aufwändigere - Insert-Molding-Verfahren zurückgegriffen. Die dort verwendeten Insert-Folien sind wesentlich dicker als übliche IMD-Folien, und weisen deshalb regelmäßig eine vielfach höhere Verstreckbarkeit auf. Zudem können aus solchen Insert-Folien nach dem Tiefziehen Löcher ausgestanzt werden, durch die hindurch dann für den Spritzgussprozess Formkerns von der folienzugewandten Seite her in die Kavität eingeführt werden können.

Um bei einer Fahrzeug-Innenverkleidung ein einheitliches Aussehen zu gewährleisten, müssen in einem solchen Fall neben dem mit der Vertiefung versehenen Teil häufig auch benachbarte Verkleidungsteile durch Insert-Molding hergestellt werden, obwohl dies für diese benachbarten Teile ggf. technisch nicht notwendig wäre. Der mit dem Einsatz der Insert-Molding Technik verbunden Kostennachteil vervielfacht sich hierdurch häufig.

Der Erfindung liegt die Aufgabe zugrunde, eine unaufwändige Herstellung von foliendekorierten Spritzgussteilen mit Vertiefungen an der Sichtoberfläche zu ermöglichen.

Bezüglich einer IMD-Form wird diese Aufgabe erfindungsgemäß gelöst durch die Merkmale des Anspruchs 1. Bezüglich einer Spritzgussvorrichtung wird die obige Aufgabe erfindungsgemäß gelöst durch die Merkmale des Anspruchs 6. Bezüglich eines Verfahrens zur Herstellung eines foliendekorierten Kunststoffteils mittels der erfindungsgemäßen IMD-Form wird die obige Aufgabe erfindungsgemäß gelöst durch die Merkmale des Anspruchs 8. Vorteilhafte Ausgestaltungen und Weiterentwicklungen der Erfindung sind Gegenstand der Unteransprüche.

Die erfindungsgemäße (IMD-)Form umfasst eine folienzugewandte Halbform und eine folienabgewandte Halbform, die in geschlossenem Zustand eine Kavität umschließen. Die Form umfasst des Weiteren einen Formkern, der die Negativform einer auszusparenden Vertiefung in dem zu fertigenden Kunststoffteil bildet, wobei dieser Formkern die Kavität vollständig durchsetzt, sich also in geschlossenem Zustand der Form von der folienzugewandten Halbform bis zu der folienabgewandten Halbform erstreckt. Der Begriff "Vertiefung" bezeichnet allgemein einen Durchbruch, eine Mulde oder einen Einschnitt in dem Kunststoffteil, der bzw. die von einer die Sichtoberfläche des Kunststoffteils bildenden Frontseite bis zu einer hierzu entgegengesetzten Rückseite des Kunststoffteils erstreckt. An der Rückseite kann die Vertiefung - je nach Anwendungsfall - mehr oder weniger durch einen Boden abgeschlossen sein. Erfindungsgemäß ist der Formkern von beiden Halbformen separat ausgebildet. Der Formkern ist mit anderen Worten lose in dem Sinne, dass der Formkern mit keiner der beiden Halbformen permanent verbunden ist. Zwischen einer Frontfläche des Formkerns und der folienzugewandten Halbform ist hierbei ein (innerer) Flächenabschnitt einer Formtrennungsfläche gebildet, entlang der in geschlossenem Zustand der Halbformen eine IMD-Folie führbar oder geführt ist. Die IMD-Folie wird bei der erfindungsgemäßen IMD-Form also bestimmungsgemäß zwischen der folienzugewandten Halbform und dem Formkern hindurchgeführt. Als "Formtrennungsfläche" wird allgemein derjenige Flächenbereich der IMD-Form bezeichnet, in dem zwei Teile der Form in geschlossenem Zustand unter Zwischenordnung der IMD-Folie aneinander anliegen.

Von besonderem Vorteil ist die Form zur Herstellung von Teilen mit mindestens einer Vertiefung einsetzbar, die sich zu der (nicht zu dekorierenden) Rückseite des Teils hin verjüngt. Entsprechend ist der Formkern vorzugsweise derart ausgebildet, dass er sich zu seiner - der Frontfläche gegenüberliegenden - Rückfläche hin verjüngt. Zusätzlich oder alternativ hierzu sind der Formkern und die folienabgewandte Halbform derart gestaltet, dass die Kavität die Rückfläche des Formkerns hinterschneidet.

Durch den von beiden Halbformen separaten Formkern wird einerseits ermöglicht, die IMD-Folie mit vergleichsweise geringer Verstreckung durch die Form hindurchzuführen, zumal die IMD-Folie nicht in die Vertiefung hineingeführt werden muss. Andererseits ermöglicht die auch von der folienabgewandten Halbform separate Ausbildung des Formkerns, den Formkern vor oder während der Entformung des Kunststoffteils von dieser Halbform abzuziehen. Somit können auch Kunststoffteile mit einer Vertiefung, die sich zu der folienabgewandten Halbform hin stark verjüngt, problemlos entformt werden.

In zweckmäßiger Ausführung der IMD-Form ist mindestens ein Abstandshalter vorgesehen, mittels dessen der Formkern an der folienabgewandten Halbform abstützbar oder abgestützt ist. Der oder jeder Abstandshalter kann hierbei entweder von dem Formkern oder von der folienabgewandten Halbform ausgehen. Es kann darüber im Rahmen der Erfindung auch eine Kombination von mehreren Abstandshaltern vorgesehen sein, von denen mindestens einer von dem Formkern, und mindestens ein anderer von der folienabgewandten Halbform ausgeht. Der oder die Abstandshalter sind vorzugsweise derart gestaltet, dass der Formkern damit passgenau an der folienabgewandten Halbform lagefixiert werden kann. Alternativ kann aber auch vorgesehen sein, dass der oder jeder Abstandshalter den Formkern mit gewissem seitlichen Spiel an der folienabgewandten Halbform hält. In diesem Fall wird der Formkern vorzugsweise erst im geschlossenen Zustand der IMD-Form durch Verklemmung zwischen den beiden Halbformen endgültig positioniert und lagefixiert.

In einer fertigungstechnisch besonders vorteilhaften Ausführungsform sind der Formkern und die folienabgewandte Halbform derart gestaltet, dass der Formkern zwar lösbar, aber - unter gewöhnlichen Betriebsbedingungen - verliersicher an der folienabgewandten Halbform fixierbar oder fixiert ist. Insbesondere ist der Formkern optional derart gestaltet, dass er in die folienabgewandte Halbform einsteckbar oder auf die folienabgewandte Halbform aufsteckbar ist.

Für eine besonders präzise Positionierung des Formkerns ist dieser an seiner Frontfläche vorzugsweise mit einer Zentrierkontur versehen, die mit einer korrespondierenden Gegenkontur an der folienzugewandten Halbform zur Zentrierung des Formkerns zusammenwirkt, indem die Zentrierkontur und die Gegenkontur im geschlossenen Zustand der Form formschlüssig ineinander greifen. Die Zentrierkontur ist insbesondere durch eine Anzahl von Noppen, Zähnen oder dgl. gebildet. Die Gegenkontur in der folienzugewandten Halbform ist vorzugsweise komplementär zu der Zentrierkontur geformt. Grundsätzlich ist allerdings auch möglich, dass die Frontfläche des Formkerns und eine korrespondierende Gegenfläche der folienzugewandten Halbform flach ausgebildet sind.

Die erfindungsgemäße Spritzgussvorrichtung umfasst die erfindungsgemäße IMD-Form in einer ihrer vorstehend beschriebenen Ausführungsvarianten. Die Spritzgussvorrichtung umfasst des Weiteren Mittel zum Führen der IMD-Folie zwischen die Halbformen (nachfolgend auch als "Folienführung" bezeichnet). Die erfindungsgemäße Spritzgussvorrichtung umfasst schließlich auch Mittel zum reversiblen Einsetzen des Formkerns in die folienabgewandte Form bzw. zum Entnehmen des Formkerns aus dieser Halbform. Diese Mittel sind dazu ausgebildet, den Formkern zwischen der IMD-Folie und der folienabgewandten Halbform zu positionieren, so dass die IMD-Folie bei geschlossener Form zwischen der Frontfläche des (eingesetzten) Formkerns und der folienzugewandten Halbform geführt wird.

Die Mittel zum Einsetzen und Entnehmen des Formkerns sind insbesondere durch einen Roboter oder durch eine sonstige automatische Handhabungseinheit gebildet. In bevorzugter Ausführung der Spritzgussvorrichtung dienen diese Mittel nicht nur zum Einsetzen und Entnehmen des Formkerns, sondern des Weiteren auch zum Entnehmen (Entformen) des Kunststoffteils aus der folienabgewandten Halbform. Insbesondere wird eine Handhabungseinheit, wie sie bei herkömmlichen Spritzgussvorrichtungen üblicherweise zum Entformen des gefertigten Spritzgussteils verwendet wird, synergetisch auch zum Entnehmen und Einsetzen des Formkerns herangezogen.

Nach dem erfindungsgemäßen Verfahren wird der Formkern im offenen Zustand der Halbformen in die folienabgewandte Halbform eingesetzt. Anschließend werden die Halbformen in den geschlossenen Zustand verfahren, wobei die IMD-Folie in der Form derart eingespannt wird, dass die IMD-Folie zwischen der Frontfläche des Formkerns und der folienzugewandten Halbform hindurchgeführt wird. Im Anschluss an das Schließen der Form wird - wie bei einem gewöhnlichen Spritzgussprozess - zur Bildung des Kunststoffteils eine aufgeschmolzene Kunststoffmasse in die zwischen den Halbformen und dem Formkern gebildete Kavität eingespritzt, wobei nach Erstarrung der Kunststoffmasse die Halbformen wieder in den geöffneten Zustand zurückgefahren werden. Nach dem Öffnen der Form werden der Formkern von der folienabgewandten Halbform abgezogen und das - durch die erstarrte Kunststoffmasse gebildete - Kunststoffteil aus der folienabgewandten Halbform entnommen (entformt). Die zeitliche Reihenfolge der vorstehend beschriebenen Verfahrensschritte ist in gewissem Umfang variierbar. Insbesondere kann der Formkern grundsätzlich gleichzeitig mit dem Kunststoffteil von der folienabgewandten Halbform getrennt werden, wobei in.diesem Fall der Formkern erst nachträglich aus dem Kunststoffteil herausgezogen wird. In einer aufgrund leichterer Umsetzbarkeit bevorzugten Ausführungsvariante wird der Formkern aber in einem dem Entformprozess vorausgehenden Schritt von der folienabgewandten Halbform abgezogen.

Die für das Verfahren herangezogene IMD-Folie liegt in bevorzugter Ausgestaltung der Erfindung als Endlosfolie vor, d.h. als Bandmaterial mit einer die Formgröße um ein Vielfaches übersteigenden Länge. Die Endlosfolie wird hierbei nach jedem Spritzgussgang schrittweise vorgeschoben, so dass die verbrauchte IMD-Folie aus dem Bereich der Form herausgeschoben und durch unverbrauchte Folie ersetzt wird.

Nachfolgend werden Ausführungsbeispiele der Erfindung anhand einer Zeichnung näher erläutert. Darin zeigen:
- Fig. 1 bis 13: in jeweils schematisch vereinfachter Querschnittsdarstellung eine ausschnitthaft dargestellte Spritzgussvorrichtung zur Herstellung eines foliendekorierten Kunststoffteils in dreizehn aufeinander folgenden Zuständen eines IMD-Spritzgussverfahrens,
- Fig. 14: in einem schematisch vergrößerten Ausschnitt XIV gemäß Fig. 12 eine Detaildarstellung des fertigen Kunststoffteils,
- Fig. 15: in einem vergrößerten Ausschnitt XV gemäß Fig. 4 eine Detaildarstellung einer IMD-Form der Spritzgussvorrichtung im geschlossenen Zustand vor dem Spritzgussvorgang,
- Fig. 16: in einem vergrößerten Ausschnitt XVI gemäß Fig. 5 eine Detaildarstellung der IMD-Form im geschlossenen Zustand nach dem Spritzgussvorgang,
- Fig. 17: in Darstellung gemäß Fig. 14 eine alternative Ausführungsform des Kunststoffteils, sowie
- Fig. 18 und 19: in Darstellung gemäß Fig. 15 bzw. 16 eine alternative Ausführungsform der IMD-Form zur Herstellung des Kunststoffteils gemäß Fig. 17.

Einander entsprechende Teile und Größen sind in allen Figuren stets mit gleichen Bezugszeichen versehen.

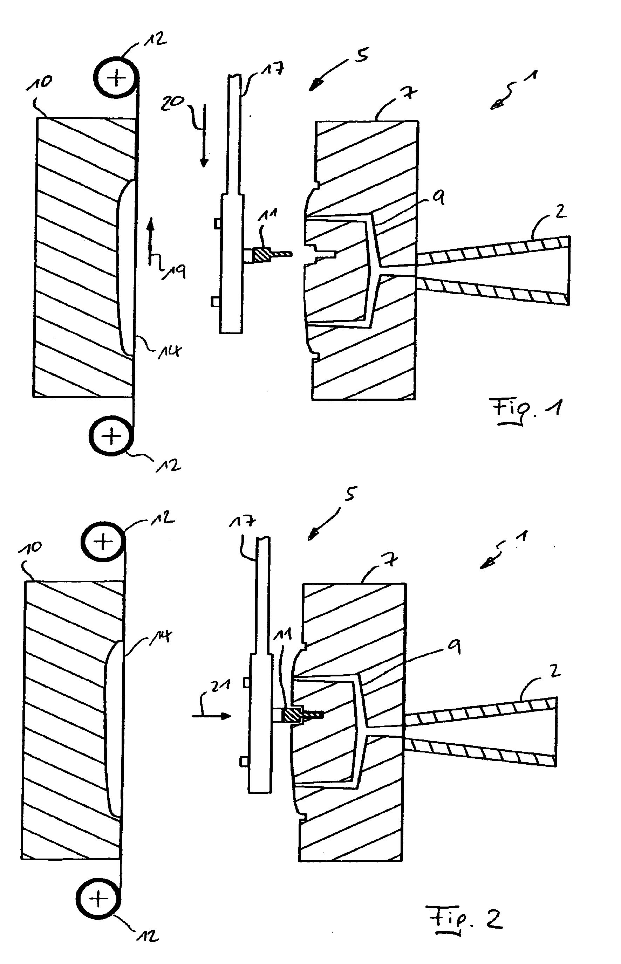

Die in den Fig. 1 bis 13 dargestellte (Spritzguss-)Vorrichtung 1 umfasst eine in der Zeichnung lediglich angedeutete Spritzeinheit 2 zur Durchführung eines (IMD-Spritzguss-)Verfahrens.

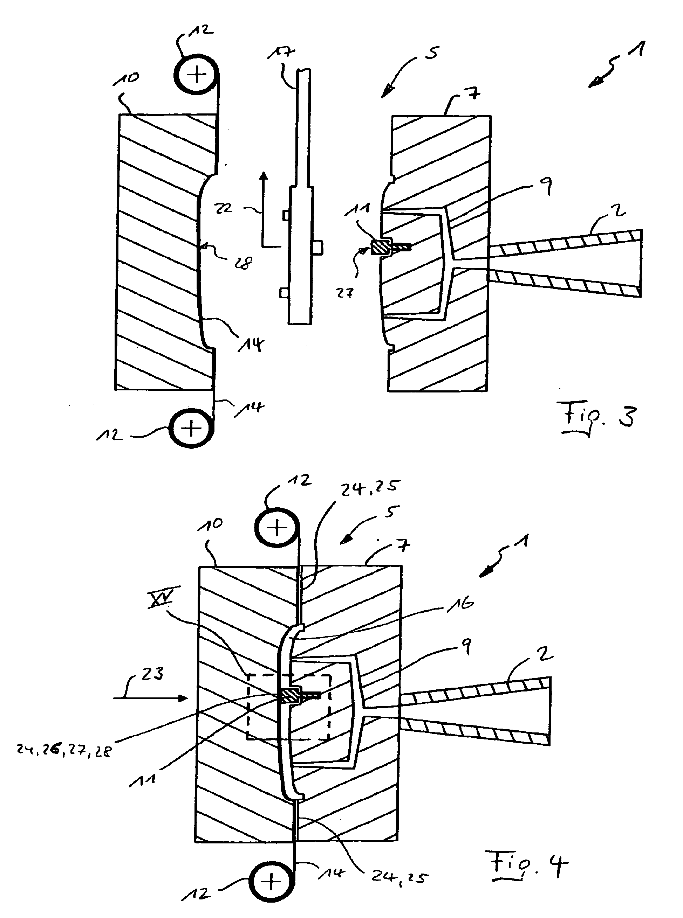

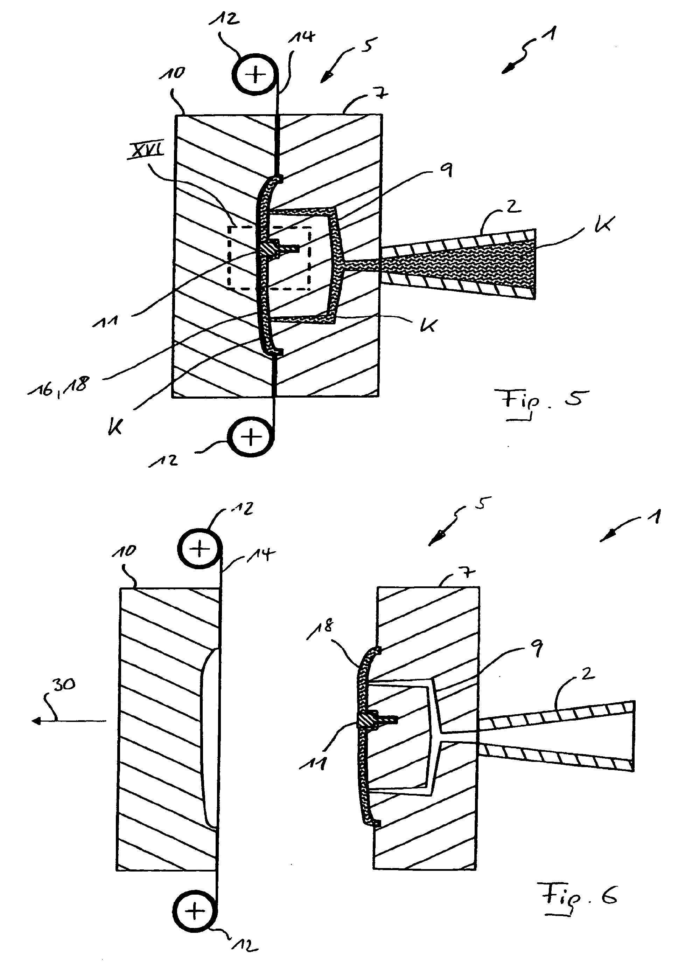

Die Vorrichtung 1 umfasst weiterhin eine (IMD-)Form 5. Die Form 5 weist eine folienabgewandte (oder einspritzseitige) Halbform 7 auf, die über ein System von Anspritzkanälen 9 mit der Spritzeinheit 2 verbunden ist. Die Form 5 umfasst weiterhin eine folienzugewandte (oder ausformseitige) Halbform 10 sowie einen Formkern 11. Der Formkern 11 bildet ein loses, sowohl von der Halbform 7 als auch von der Halbform 10 separates Bauteil, das reversibel an der Halbform 7 lagefixierbar und ablösbar ist. Die Halbformen 7 und 10 können mittels einer hydraulischen Stelleinheit der Vorrichtung 1 reversibel zwischen einer geöffneten Stellung (z.B. Fig. 1) und einer geschlossenen Stellung (Fig. 4 und 5) verfahren werden. In der geschlossenen Stellung der Form 5 ist zwischen den beiden Halbformen 7 und 10 eine nach außen hin geschlossene Kavität 16 gebildet (Fig. 4).

Der Form 5 ist eine (vereinfacht dargestellte) Folienführung 12 zur Führung einer (IMD-)Folie 14 zugeordnet. Die Folienführung 12 umfasst die für die Positionierung, Spannung und den Vorschub der Folie 14 erforderlichen Teile, insbesondere eine Wickeltrommel zur Vorhaltung der unverbrauchten Folie 14 sowie eine zweite Wickeltrommel zur Aufnahme der verbrauchten Folie 14. Die Folienführung 12 umfasst weiterhin Mittel zur Lenkung der Folie 14 sowie einen Antrieb zur Steuerung des Folienvorschubs. Die in Form von Endlos-Bandmaterial vorliegende Folie 14 wird durch die Folienführung 12 zwischen den Halbformen 7 und 10 hindurchgeführt.

Die Vorrichtung 1 umfasst des Weiteren eine (grob vereinfacht dargestellte) Handhabungseinheit 17, die sowohl zum Einsetzen und Entnehmen des Formkems 11 in die bzw. aus der Halbform 7 als auch zum Entformen eines im Spritzgussverfahren gefertigten Kunststoffteils 18 (Fig. 5) dient.

Fig. 1 zeigt die Spritzgusseinrichtung 1 bei einem ersten Schritt des Spritzgussverfahrens. Im Zuge dieses Schritts wird bei geöffneter Form 5 die Folie 14 mittels der Folienführung 12 (wie in Fig. 1 durch einen Pfeil 19 angedeutet) derart vorgeschoben, dass die Innenfläche der Halbform 10, oder zumindest die von der Kavität 16 eingenommene Fläche, vollständig von unverbrauchter IMD-Folie 14 überspannt wird.

Des Weiteren wird mittels der Handhabungseinheit 17 der Formkern 11 zwischen die geöffneten Halbformen 7 und 11 eingefahren (wie in Fig. 1 durch einen Pfeil 20 angedeutet).

In einem folgenden Schritt des Verfahrens wird der Formkern 11 gemäß Fig. 2 - unter Bewegung der Handhabungseinheit 17 in Richtung eines Pfeils 21 - durch Einstecken in die Halbform 7 an derselben lagefixiert. Anschließend wird die Handhabungseinheit 17 gemäß Fig. 3 - wie dort durch einen Pfeil 22 angedeutet - aus dem zwischen den Halbformen 7 und 10 gebildeten Raum herausgefahren. Des Weiteren wird die Folie 14 durch Erzeugung eines Unterdrucks zwischen der Folie 14 und der Halbform 10 an die Innenfläche der letzteren tiefgezogen.

In einem weiteren Verfahrensschritt wird die Halbform 10 gemäß Fig. 4 - wie dort durch einen Pfeil 23 angedeutet - gegen die Halbform 7 verfahren. Die Form 5 wird somit geschlossen. Die Folie 14 wird hierbei entlang der so genannten Formtrennung 24 (Fig. 4) der Form 5 eingespannt. Die Formtrennung 24 umfasst einen äußeren Flächenbereich 25 (Fig. 4), in dem die Halbformen 7 und 10 außerhalb der Kavität 16 dichtend aneinander anliegen. Zusätzlich umfasst die Formtrennung 24 einen inneren, d.h. vollständig in der Kavität 16 liegenden Flächenbereich 26 (Fig. 4). Dieser innere Flächenbereich 26 der Formtrennung 24 wird durch eine Frontfläche 27 (Fig. 3) des Formkerns 11 gebildet, der - wiederum unter Einspannung der Folie 14 - an einer Gegenfläche 28 (Fig. 3) der Halbform 10 anliegt.

Nach dem Schließen der Form 5 wird mittels der Spritzeinheit 2 gemäß Fig. 5 über die Anspritzkanäle 9 der Halbform 7 ein aufgeschmolzenes Kunststoffmaterial K in die Kavität 16 eingespritzt. Das die Kavität 16 vollständig ausfüllende Kunststoffmaterial K bildet nach Erkalten und dem damit verbundenen Erstarren das zu fertigende Kunststoffteil 18.

Nach dem Erkalten und Erstarren des Kunststoffteils 18 wird die Form 5 gemäß Fig. 6 wieder geöffnet, indem die Halbform 10 - wie durch einen Pfeil 30 angedeutet - in die geöffnete Stellung zurückgefahren wird. Dabei wird eine Trägerfolie der IMD-Folie 14 unter Ablösung der nun mit dem Kunststoffteil 18 verbundenen Lackschicht von dem Kunststoffteil 18 abgezogen.

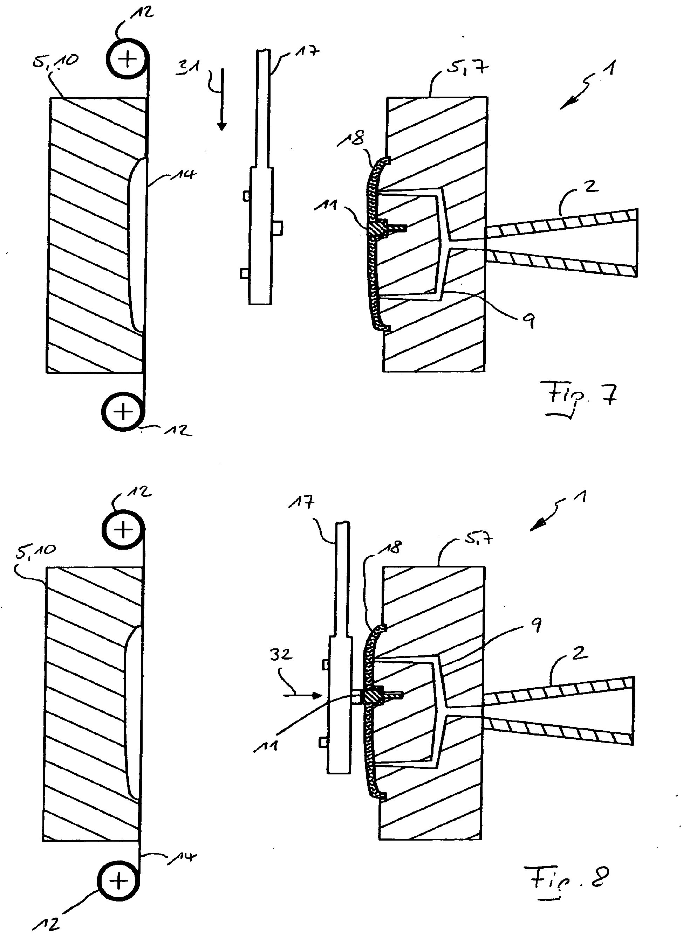

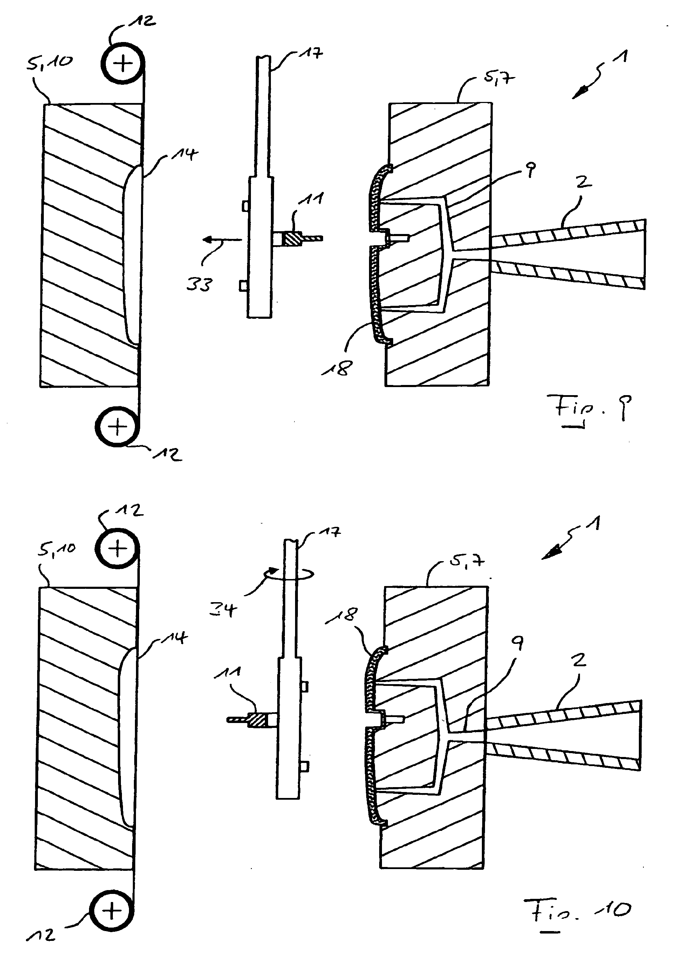

Anschließend wird die Handhabungseinheit 17 gemäß Fig. 7 und 8 wieder zwischen die Halbformen 7 und 10 eingefahren (Pfeil 31 in Fig. 7) und gegen den Formkern 11 vorgeschoben (Pfeil 32 in Fig. 8). Der Formkern 11 wird nun mittels der Handhabungseinheit 17 von der Halbform 7 abgezogen (Pfeil 33 in Fig. 9). Der Formkern 11 wird dabei auch aus dem Kunststoffteil 18 herausgezogen.

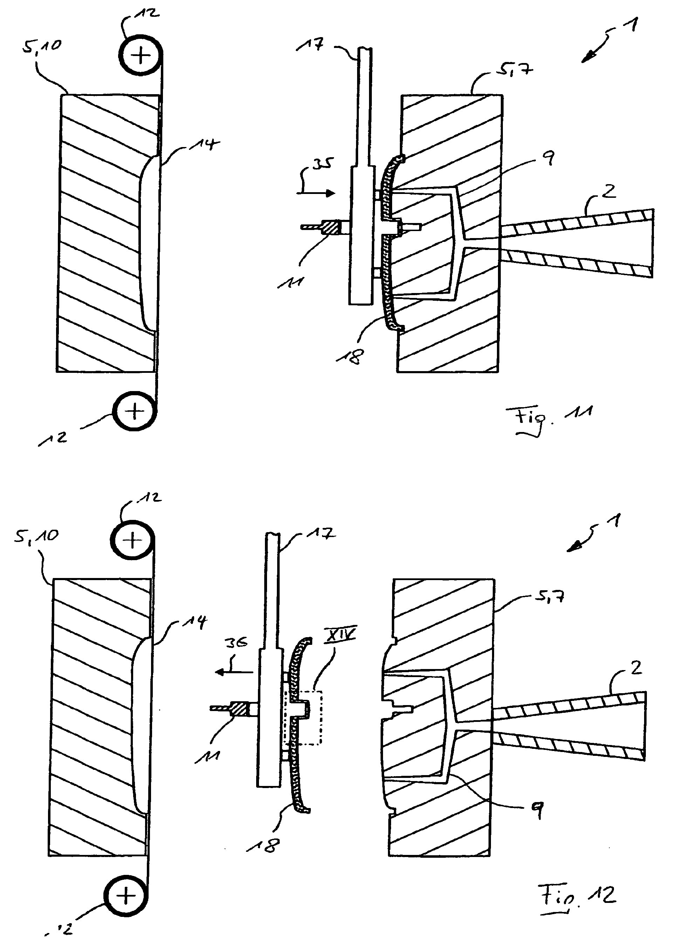

Zur Ausformung des Kunststoffteils 18 wird nun gemäß Fig. 10 die Handhabungseinheit 17 gewendet, so dass der Formstift 11 nunmehr der Halbform 10 zugewendet ist (Pfeil 34 in Fig. 10). Die Handhabungseinheit 17 wird nun - gemäß Pfeil 35 in Fig. 11 - erneut gegen die Halbform 7 verfahren, wobei die Handhabungseinheit 17 nun das Formteil 18 ergreift.

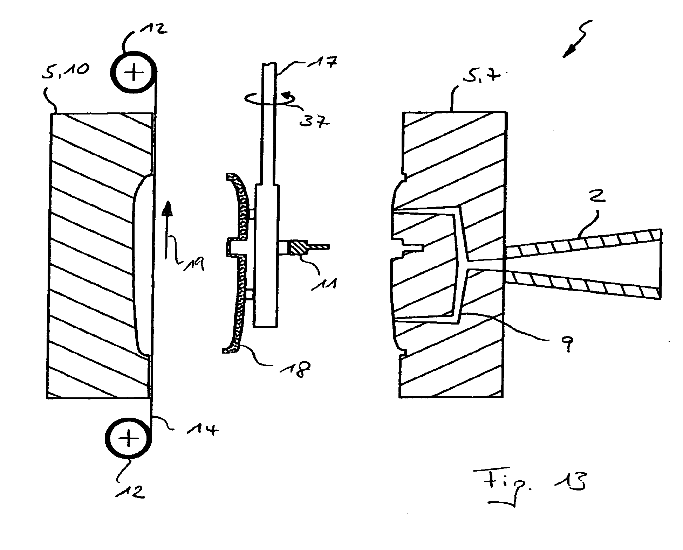

Die Handhabungseinheit 17 wird anschließend wiederum von der Halbform 7 entfernt (Pfeil 36 in Fig. 12), wobei das Kunststoffteil 18 aus der Halbform 7 entformt wird, und erneut gewendet (Pfeil 37 in Fig. 13).

Damit ist die Ausgangslage des Verfahrens gemäß Fig. 1 wieder hergestellt. Insbesondere kann nun der Formkern 11 mittels der Handhabungseinheit 17 erneut analog zur Fig. 2 in die Halbform 7 eingesteckt werden. Beim Rückfahren aus dem zwischen den Halbformen 7 und 8 gebildeten Raum nimmt die Handhabungseinheit 17 nun aber abweichend von Fig. 3 das im vorausgegangenen Spritzgussgang angefertigte Kunststoffteil 18 mit.

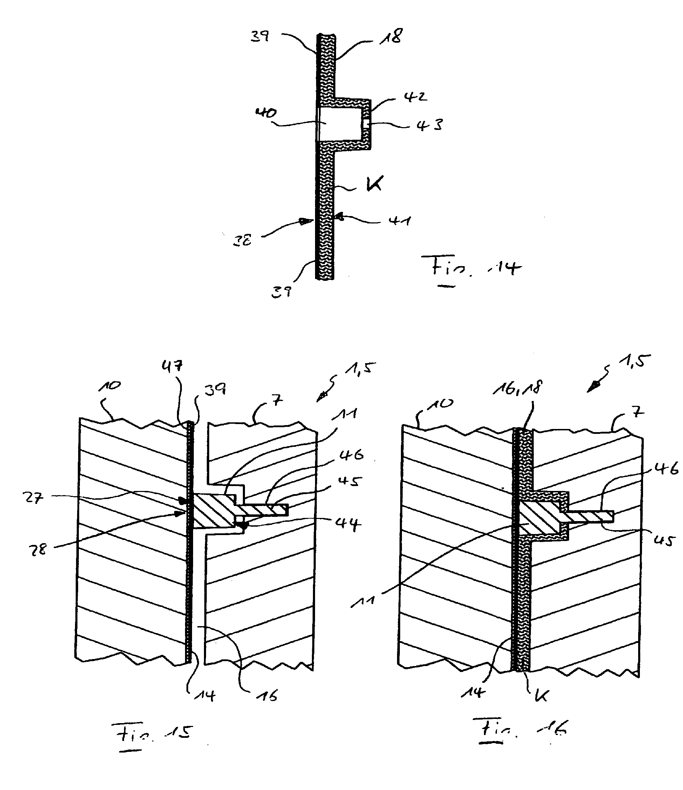

Ein vergrößerter Ausschnitt des Kunststoffteils 18 ist in Fig. 14 dargestellt. Aus dieser Darstellung wird insbesondere ersichtlich, dass das Kunststoffteil 18 an einer beim Spritzgussprozess der Halbform 10 zugewandten Frontseite 38, die die Sichtoberfläche des Teils 18 bildet, mit der von der IMD-Folie 14 abgezogenen Lackschicht 39 beschichtet ist. Wie Fig. 14 weiterhin zu entnehmen ist, weist das Kunststoffteil 18 eine von der Frontseite 38 ausgehende Vertiefung 40 auf, die an der von der Frontseite 38 abgewandten Rückseite 41 des Kunststoffteils 18 durch einen Boden 42 weitgehend geschlossen ist. Lediglich durch eine - im Vergleich zum Durchmesser der Vertiefung 40 kleine Durchführung 43 ist die Vertiefung 40 zu der Rückseite 41 hin geöffnet.

Bei dem Kunststoffteil 18 handelt es sich insbesondere um eine Blende einer Kraftfahrzeug-Innenraumverkleidung. Die Vertiefung 40 dient dabei beispielsweise zur Aufnahme eines Schalters. Der Boden 42 dient als einschubbegrenzender Anschlag für den Schalter. Die schmale Durchführung 43 dient einerseits zur Verschraubung des Schalters an dem Kunststoffteil 18, sowie andererseits zur Durchführung von elektrischen Anschlussleitungen für den Schalter.

Aus den vergrößerten Darstellungen gemäß Fig. 15 und 16 wird deutlich, dass der zur Herstellung der Vertiefung 40 dienende Formkern 11 derart in der Halbform 7 lagefixiert ist, dass seine von der Frontfläche 27 abgewandte Rückfläche 44 mit Abstand zu der Innenseite der Halbform 7 angeordnet ist, so dass die Kavität 16 den Formkern 11 rückseitig hinterschneidet. Um den Formkern 11 in definierten Abstand zu der Halbform 7 positionieren zu können, ist der Formkern 11 mit einem von seiner Rückfläche 44 abragenden Haltestift 45 versehen, mit dem der Formkern 11 passgenau in eine korrespondierende Bohrung 46 der Halbform 7 eingreift. Der Haltestift 45 dient somit einerseits als Abstandshalter zur Positionierung des Formstifts 11. Andererseits dient der Haltestift 45 zur verliersicheren Fixierung des Formstifts 11 an der Halbform 7. Beim Spritzgussprozess bildet der Haltestift 45 die im Boden 42 der Vertiefung 40 ausgesparte Durchführung 43 des Kunststoffteils 18 aus.

Wie aus der vergrößerten Darstellung gemäß Fig. 15 und 16 ebenfalls vorgeht, wird die IMD-Folie 14 derart in die Form 5 eingelegt, dass die Lackschicht 39 der Halbform 7, und somit der Kavität 16 zugewandt ist, während die IMD-Folie 14 mit einer Trägerfolie 47 unmittelbar an der Innenseite der Halbform 10 anliegt. Auf diese Weise kommt beim Spritzgussprozess die Lackschicht 39 in unmittelbaren Kontakt mit der eingespritzten Kunststoffmasse K und kann sich somit mit der Oberfläche des Kunststoffteils 18 verbinden. Beim Entformen wird die Lackschicht 39 - wie vorstehend erwähnt - von der Trägerschicht 47 abgezogen, so dass nur die Lackschicht 39 an dem fertigen Kunststoffteil 18 verbleibt.

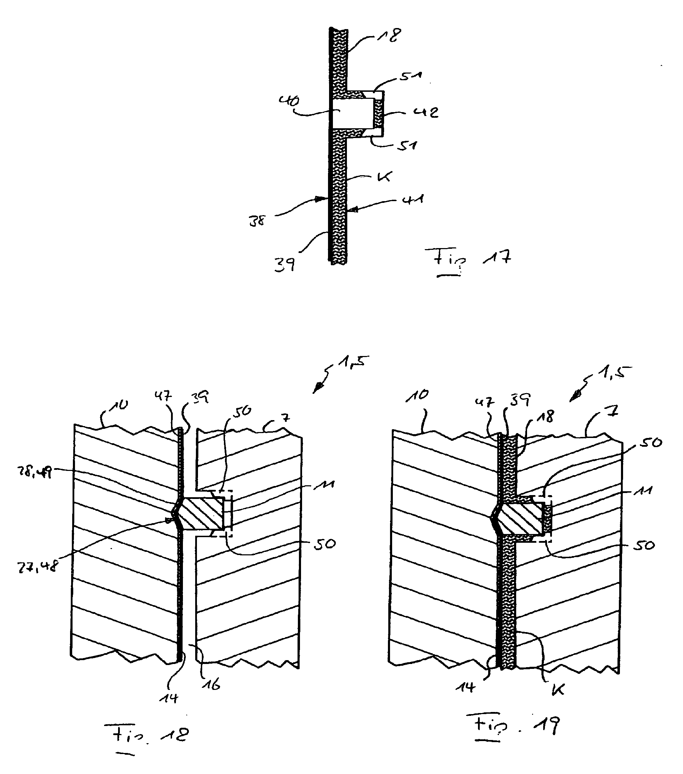

Bei dem vorstehend beschriebenen Ausführungsbeispiel der Form 5 sind die Frontfläche 27 des Formkerns 11 und die korrespondierende Gegenfläche 28 der Halbform 10 flach ausgebildet, so dass die Folie 14 zwischen diesen Flächen plan hindurchgeführt ist. Für eine besonders präzise Lagefixierung des Formkerns 11 ist abweichend hiervon in einer alternativen Ausführungsform der Form 5 gemäß Fig. 18 und 19 die Frontfläche 27 des Formkerns 11 mit einer kegeligen Zentrierkontur 48 versehen. Die Zentrierkontur 48 greift bei geschlossener Form 5 formschlüssig in eine komplementär gestaltete Gegenkontur 49 ein, zu der die an der Halbform 10 ausgebildete Gegenfläche 28 ausgeformt ist.

Die in den Fig. 18 und 19 dargestellte Ausführungsform der Form 5 unterscheidet sich von der ersten Ausführungsform der Form 5 (Fig. 15 und 16) weiterhin dadurch, dass hier als Abstandshalter zur Lagefixierung des Formkerns 11 vier Radialstege 50 (von denen in Fig. 19 nur zwei sichtbar sind), vorgesehen sind, die den rückseitigen Rand des Formkerns 11 umgreifen. Die Radialstege 50 gehen hier von der Halbform 7 aus und sind insbesondere monolithisch aus dem Material der Halbform 7 herausgearbeitet.

Das durch die Form 5 gemäß Fig. 18 und 19 hergestellte Kunststoffteil 18 ist in Fig. 17 schematisch dargestellt. Aus dieser Darstellung ist insbesondere ersichtlich, dass das Kunststoffteil gemäß Fig. 17 im Bereich des Bodens 42 der Vertiefung 40 mit vier seitlichen Durchbrüchen 51 versehen ist, die beim Spritzgussprozess durch die Radialstege 50 ausgebildet werden.

Zusammenfassend wird eine IMD-Form 5 zur Herstellung eines foliendekorierten Kunststoffteils 18 angegeben. Die IMD-Form 5 umfasst eine folienzugewandte Halbform 10 und eine folienabgewandte Halbform 7, die in geschlossenem Zustand eine Kavität 16 umschließen. Die IMD-Form 5 umfasst weiterhin einen die Kavität 16 vollständig durchsetzenden, von beiden Halbformen 7,10 separaten Formkern 11. Es wird außerdem eine Spritzgussvorrichtung 1 angegeben, die zusätzlich zu der vorstehend beschriebenen IMD-Form 5 Mittel 12 zum Führen der IMD-Folie 14 zwischen die Halbformen 7,10 sowie Mittel 17 zum Einsetzen und Entnehmen des Formkerns 11 in die folienabgewandte Halbform 7 bzw. aus der folienabgewandten Halbform 7 umfasst. Zur Herstellung eines foliendekorierten Kunststoffteils 18 mittels der IMD-Form 5 werden der Formkern 11 in einem offenen Zustand der Halbformen 7,10 in die folienabgewandte Halbform 7 eingesetzt, und die Halbformen 7,10 unter Einspannung der IMD-Folie 14 aus dem offenen Zustand in einen geschlossenen Zustand verfahren, so dass die IMD-Folie 14 zwischen der Frontfläche 27 des Formkerns 11 und der folienzugewandten Halbform 10 hindurchgeführt ist. Anschließend wird zur Bildung des Kunststoffteils 18 eine aufgeschmolzene Kunststoffmasse K in die zwischen den Halbformen 7,10 gebildete Kavität 16 eingespritzt. Nach Erstarrung der Kunststoffmasse K werden die Halbformen 7,10 in den geöffneten Zustand zurückgefahren, woraufhin der Formkern 11 von der folienabgewandten Halbform 7 abgezogen, und das durch die erstarrte Kunststoffmasse K gebildete Kunststoffteil 18 aus der folienabgewandten Halbform 7 entnommen werden.

Die Erfindung ist nicht auf die vorstehend beschriebenen Ausführungsbeispiele beschränkt. Vielmehr können zahlreiche weitere Ausführungsvarianten der Erfindung von dem Fachmann gefunden werden. Insbesondere können die anhand der Ausführungsbeispiele jeweils beschriebenen Einzelmerkmale im Rahmen der Erfindung auch auf andere Weise miteinander kombiniert werden.

**Bezugszeichenliste**

| | | | |
|---|---|---|---|
| 1 | (Spritzguss-)Vorrichtung | 39 | Lackschicht |
| 2 | Spritzeinheit | 40 | Vertiefung |
| 5 | IMD-Form | 41 | Rückseite |
| 7 | (folienabgewandte) Halbform | 42 | Boden |
| 9 | Anspritzkanal | 43 | Durchführung |
| 10 | (folienzugewandte) Halbform | 44 | Rückfläche |
| 11 | Formkern | 45 | Haltestift |
| 12 | Folienführung | 46 | Bohrung |
| 14 | (IMD-)Folie | 47 | Trägerfolie |
| 16 | Kavität | 48 | Zentrierkontur |
| 17 | Handhabungseinheit | 49 | Gegenkontur |
| 18 | Kunststoffteil | 50 | Radialsteg |
| 19 | Pfeil | 51 | Durchbruch |
| 20 | Pfeil | | |
| 21 | Pfeil | K | Kunststoffmaterial |
| 22 | Pfeil | | |
| 23 | Pfeil | | |
| 24 | Formtrennung | | |
| 25 | (äußerer) Flächenbereich | | |
| 26 | (innerer) Flächenbereich | | |
| 27 | Frontfläche | | |
| 28 | Gegenfläche | | |
| 30 | Pfeil | | |
| 31 | Pfeil | | |
| 32 | Pfeil | | |
| 33 | Pfeil | | |
| 34 | Pfeil | | |
| 35 | Pfeil | | |
| 36 | Pfeil | | |
| 37 | Pfeil | | |
| 38 | Frontseite | | |

## Patentansprüche

1. IMD-Form (5) zur Herstellung eines foliendekorierten Kunststoffteils (18), mit einer folienzugewandten Halbform (10) und einer folienabgewandten Halbform (7), die in geschlossenem Zustand eine Kavität (16) umschließen, sowie mit einem die Kavität (16) vollständig durchsetzenden Formkern (11), wobei zwischen einer der folienzugewandten Halbform (10) zugewandten Frontfläche (27) des Formkerns (11) und der folienzugewandten Halbform (10) ein innerer Flächenabschnitt (26) einer Formtrennungsfläche (24) gebildet ist, entlang der im geschlossenen Zustand der Halbformen (7,10) eine IMD-Folie (14) führbar oder geführt ist,
**dadurch gekennzeichnet,**
**dass** der Formkern (11) sich zu seiner der Frontfläche (27) gegenüberliegenden Rückfläche (44) hin verjüngt und/oder dass die Kavität (16) die Rückfläche (44) des Formkerns (11) hinterschneidet, und dass der Formkern (11) von beiden Halbformen (7,10) separat ist, so dass er vor oder während der Entformung des Kunststoffteils (18) von der folienabgewandten Halbform (7) abziehbar ist.

2. IMD-Form (5) nach Anspruch 1,
wobei der Formkern (11) mittels mindestens eines Abstandshalters (45,50) an der folienabgewandten Halbform (7) passgenau oder mit Spiel lagefixierbar oder lagefixiert ist.

3. IMD-Form (5) nach Anspruch 2,
wobei der Formkern (11) mittels des oder jeden Abstandhalters (45,50) unverlierbar an der folienabgewandten Halbform (7) fixierbar oder fixiert ist.

4. IMD-Form (5) nach einem der Ansprüche 1 bis 3,
wobei die Frontfläche (27) des Formkerns (11) eine Zentrierkontur (48) aufweist, die im geschlossenen Zustand der Halbformen (7,10) zur Zentrierung des Formkerns (11) mit einer Gegenkontur (49) der follenzugewandten Halbform (10) einen Formschluss bildet.

5. Spritzgussvorrichtung (1) mit einer IMD-Form (5) nach einem der Ansprüche 1 bis 4, mit Mitteln (12) zum Führen der IMD-Folie (14) zwischen die Halbformen (7,10), und mit Mitteln (17) zum Einsetzen und Entnehmen des Formkerns (11) in die folienabgewandte Halbform (7) bzw. aus der folienabgewandten Halbform (7) derart, dass die IMD-Folie (14) zwischen der Frontfläche (27) des Formkerns (11) und der folienzugewandten Halbform (10) hindurchgeführt ist.

6. Spritzgussvorrichtung (1) nach Anspruch 5,
wobei die Mittel (17) zum Einsetzen und Entnehmen des Formkerns (11) auch zum Entnehmen des Kunststoffteils (18) aus der folienabgewandten Halbform (7) ausgebildet sind.

7. Verfahren zur Herstellung eines foliendekorierten Kunststoffteils (18) mittels einer IMD-Form (5) gemäß einem der Ansprüche 1 bis 4,
- bel welchem der Formkern (11) in einem offenen Zustand der Halbformen (7,10) in die folienabgewandte Halbform (7) eingesetzt wird,
- bei welchem die Halbformen (7,10) unter Einspannung der IMD-Folie (14) aus dem offenen Zustand In einen geschlossenen Zustand verfahren werden, wobei die IMD-Folie (14) zwischen der Frontfläche (27) des Formkerns (11) und der follenzugewandten Halbform (10) hindurchgeführt wird,
- bei welchem zur Bildung des Kunststoffteils (18) eine aufgeschmolzene Kunststoffmasse (K) in die zwischen den Halbformen (7,10) gebildete Kavität (16) eingespritzt wird,
- bei welchem nach Erstarrung der Kunststoffmasse (K) die Halbformen (7,10) in den geöffneten Zustand zurückgefahren werden,
- bei welchem der Formkern (11) von der folienabgewandten Halbform (7) abgezogen wird, und
- bei welchem das durch die erstarrte Kunststoffmasse (K) gebildete Kunststoffteil (18) aus der follenabgewandten Halbform (7) entnommen wird.

8. Verfahren nach Anspruch 7,
wobei eine Endlosfolie als IMD-Folie (14) herangezogen wird.

## Claims

1. IMD mould (5) for the production of a film-decorated plastic part (18), having a mould half (10) facing towards the film and a mould half (7) facing away from the film, which enclose a cavity (16) in a closed state, as well as having a mould core (11) which pushes through the cavity (16) completely, wherein an inner surface section (26) of a demoulding surface (24) is formed between a front surface (27) of the mould core (11) which faces towards the mould half (10) facing towards the film and the mould half (10) facing towards the film, along which surface section (26) an IMD film (14) is able to be guided or is guided in the closed state of the mould halves (7, 10),
**characterised in that**,
the mould core (11) tapers towards its rear surface (44) which lies opposite the front surface (27) and/or the cavity (16) undercuts the rear surface (44) of the mould core (11), and the mould core (11) is separate from both mould halves (7, 10) such that it is able to be removed from the mould half (7) facing away from the film before or during the demoulding of the plastic part (18).

2. IMD mould (5) according to claim 1,
wherein the mould core (11) is able to be fixed in position or is fixed in position, in a tailored manner or with clearance, on the mould half (7) facing away from the film by means of at least one spacer (45, 50).

3. IMD mould (5) according to claim 2,
wherein the mould core (11) is able to be fixed or is fixed undetachably to the mould half (7) facing away from the film by means of the or each spacer (45, 50).

4. IMD mould (5) according to one of claims 1 to 3, wherein the front surface (27) of the mould core (11) has a centre contour (48) which forms a positive fit in the closed state of the mould halves (7, 10) to centre the mould core (11) with a counter contour (49) of the mould half (10) facing towards the film.

5. Injection moulding device (1) having an IMD mould (5) according to one of claims 1 to 4, having means (12) to guide the IMD film (14) between the mould halves (7, 10), and having means (17) to insert and remove the mould core (11) into the mould half (7) facing away from the film or from the mould half (7) facing away from the film in such a way that the IMD film (14) is guided between the front surface (27) of the mould core (11) and the mould half (10) facing towards the film.

6. Injection moulding device (1) according to claim 5, wherein the means (17) to insert and remove the mould core (11) is also formed to remove the plastic part (18) from the mould half (7) facing away from the film.

7. Method for the production of a film-decorated plastic part (18) by means of an IMD mould (5) according to one of claims 1 to 4,
- in which the mould core (11) is inserted into the mould half (7) facing away from the film in an open state of the mould halves (7, 10),
- in which the mould halves (7, 10) are processed from the open state into a closed state by clamping the IMD film (14), wherein the IMD film (14) is guided between the front surface (27) of the mould core (11) and the mould half (10) facing towards the film,
- in which, for the formation of the plastic part (18), a melted plastic mass (K) is injected into the cavity (16) formed between the mould halves (7, 10),
- in which, after solidification of the plastic mass (K), the mould halves (7, 10) are driven back into the open state,
- in which the mould core (11) is removed from the mould half (7) facing away from the film, and
- in which the plastic part (18) formed by the solidified plastic mass (K) is removed from the mould half (7) facing away from the film.

8. Method according to claim 7,
wherein a continuous film is used as the IMD film (14).

## Revendications

1. Moule (5) pour la technique de moulage IMD (décoration dans le moule) pour la fabrication d'une pièce de matière plastique (18) décorée par une feuille, comprenant un demi-moule (10) situé du côté de la feuille et un demi-moule (7) à l'opposé de la feuille, qui, dans l'état fermé, enferment une cavité (16), et comprenant également un noyau de moule (11) traversant la cavité (16) en totalité, moule dans lequel entre une surface frontale avant (27) du noyau de moule (11), dirigée vers le demi-moule (10) situé du côté de la feuille, et le demi-moule (10) situé du côté de la feuille, est formé un secteur de surface intérieur (26) d'une surface de plan de joint de moule (24) le long de laquelle, dans l'état fermé des demi-moules (7, 10), peut être guidée ou est guidée une feuille IMD (14)(feuille de décor dans le moule),
**caractérisé**
**en ce que** le noyau de moule (11) se rétrécit en direction de sa surface arrière (44) opposée à sa surface frontale avant (27) et/ou en ce que la cavité (16) dégage la surface arrière (44) du noyau de moule (11), et en ce que le noyau de moule (11) est séparé et distinct des deux demi-moules (7, 10), de sorte qu'il peut être retiré du demi-moule (7) à l'opposé de la feuille, avant ou pendant le démoulage de la pièce de matière plastique (18).

2. Moule (5) pour la technique de moulage IMD selon la revendication 1,
dans lequel le noyau de moule (11) peut être fixé en position ou est fixé en position, de manière précisément ajustée ou avec jeu, sur le demi-moule (7) à l'opposé de la feuille, au moyen d'au moins un écarteur de maintien (45, 50).

3. Moule (5) pour la technique de moulage IMD selon la revendication 2,
dans lequel le noyau de moule (11) peut être fixé ou est fixé de manière imperdable sur le demi-moule (7) à l'opposé de la feuille, au moyen de ou de chaque écarteur de maintien (45, 50).

4. Moule (5) pour la technique de moulage IMD selon l'une des revendications 1 à 3,
dans lequel la surface frontale avant (27) du noyau de moule (11) présente un contour de centrage (48), qui, dans l'état fermé des demi-moules (7, 10), forme, pour le centrage du noyau de moule (11), une liaison par complémentarité de formes avec un contour conjugué (49) du demi-moule (10) situé du côté de la feuille.

5. Dispositif de moulage par injection (1) comprenant un moule (5) pour la technique de moulage IMD selon l'une des revendications 1 à 4, comprenant également des moyens (12) pour mener et guider la feuille IMD (14) (feuille de décor dans le moule) entre les demi-moules (7, 10), et comprenant des moyens (17) pour mettre en place et retirer le noyau de moule (11) dans le demi-moule (7) à l'opposé de la feuille et respectivement hors du demi-moule (7) à l'opposé de la feuille, de façon telle que la feuille IMD (14) soit guidée entre la surface frontale avant (27) du noyau de moule (11) et le demi-moule (10) situé du côté de la feuille.

6. Dispositif de moulage par injection (1) selon la revendication 5,
dans lequel les moyens (17) pour mettre en place et retirer le noyau de moule (11) sont également conçus pour retirer la pièce de matière plastique (18) hors du demi-moule (7) à l'opposé de la feuille.

7. Procédé de fabrication d'une pièce de matière plastique (18) décorée par une feuille au moyen d'un moule (5) pour la technique de moulage IMD selon l'une des revendications 1 à 4,
- d'après lequel le noyau de moule (11) est mis en place dans le demi-moule (7) à l'opposé de la feuille, dans un état ouvert des demi-moules (7, 10),
- d'après lequel les demi-moules (7, 10) sont déplacés de l'état ouvert à un état fermé où ils enserrent la feuille IMD (14), la feuille IMD (14) étant guidée entre la surface frontale avant (27) du noyau de moule (11) et le demi-moule (10) situé du côté de la feuille,
- d'après lequel, pour la réalisation de la pièce de matière plastique (18), une masse de matière plastique (K) fondue est injectée dans la cavité (16) formée entre les demi-moules (7, 10),
- d'après lequel, après solidification de la masse de matière plastique (K), les demi-moules (7, 10) sont ramenés dans l'état ouvert,
- d'après lequel le noyau de moule (11) est retiré du demi-moule (7) à l'opposé de la feuille, et
- d'après lequel la pièce de matière plastique (18) formée par la masse de matière plastique (K) solidifiée, est prélevée et retirée du demi-moule (7) à l'opposé de la feuille.

8. Procédé selon la revendication 7,
d'après lequel on utilise une feuille sans fin en tant que feuille IMD (14).
